# EUROPÄISCHE PATENTANMELDUNG

(11) **EP 4 403 316 A1**
(43) Veröffentlichungstag der Anmeldung: **24.07.2024**
(21) Anmeldenummer: 23152420.8
(22) Anmeldetag: 19.01.2023
(51) Int. Cl.: B25J 9/16

(54) **SYNCHRONISIERUNGSVERFAHREN ZUR KOORDINIERTEN AUSFÜHRUNG VON ARBEITSSCHRITTEN FÜR EINE BEARBEITUNG EINES WERKSTÜCKS**

(71) Anmelder: Siemens Aktiengesellschaft, 80333 München (DE)
(72) Erfinder: Bauer, Peter, 91074 Herzogenaurach (DE); Geissdörfer, Klaus, 91056 Erlangen (DE); Lorenz, Florian, 91058 Erlangen (DE); Puchtler, Thomas, 91325 Adelsdorf (DE); Tauchmann, Sven, 09127 Chemnitz (DE)
(74) Vertreter: Siemens Patent Attorneys

(57) **Zusammenfassung**

Die Erfindung betrifft ein Synchronisierungsverfahren (1) zur koordinierten Ausführung (2) von Arbeitsschritten für eine Bearbeitung eines Werkstücks (17), wobei eine erste Bearbeitungsvorrichtung (3) einer Bearbeitungsmaschine (4) einen ersten Arbeitsschritt (5) ausführt, wobei eine zweite Bearbeitungsvorrichtung (6) der Bearbeitungsmaschine (4) oder einer weiteren Bearbeitungsmaschine (7) einen zweiten Arbeitsschritt (8) ausführt, wobei der erste Arbeitsschritt (5) einen ersten Synchronisierungsparameter (9) und der zweite Arbeitsschritt (8) einen zweiten Synchronisierungsparameter (10) aufweist, wobei der erste und zweite Synchronisierungsparameter (9,10) auf einem Bearbeitungsparameter (11) für die Bearbeitung des Werkstücks (17) basieren, wobei in einem Vergleich (12) der erste Synchronisierungsparameter (9) kontinuierlich mit dem zweiten Synchronisierungsparameter (10) verglichen wird und wobei die koordinierte Ausführung (2) von erstem und zweitem Arbeitsschritt (5,8) in Abhängigkeit vom Ergebnis des Vergleichs (12) durchgeführt wird. Weiterhin betrifft die Erfindung eine Bearbeitungsmaschine (4) und ein Bearbeitungsmaschinensystem (34) mit dem Synchronisierungsverfahren (1) sowie ein Computerprogrammprodukt (35) für eine zumindest teilweise Ausführung des Synchronisierungsverfahrens (1).

## Beschreibung

Die Erfindung betrifft ein Synchronisierungsverfahren zur koordinierten Ausführung von Arbeitsschritten für eine Bearbeitung eines Werkstücks, wobei eine erste Bearbeitungsvorrichtung einer Bearbeitungsmaschine einen ersten Arbeitsschritt ausführt und eine zweite Bearbeitungsvorrichtung der Bearbeitungsmaschine oder einer weiteren Bearbeitungsmaschine einen zweiten Arbeitsschritt ausführt. Weiterhin betrifft die Erfindung eine Bearbeitungsmaschine und ein Bearbeitungsmaschinensystem mit dem Synchronisierungsverfahren sowie ein Computerprogrammprodukt für eine zumindest teilweise Ausführung des Synchronisierungsverfahrens.

Bei der Bearbeitung von Werkstücken - wie auch bei der Herstellung von Produkten - ist es oftmals notwendig, dass Bearbeitung- bzw. Herstellungsschritte, welche z.B. durch einen eine Werkzeugmaschine für die Bearbeitung eines Werkstückes oder durch eine Produktionsmaschine für die Herstellung eines Produktes durchgeführt werden, jeweils synchronisiert zueinander ablaufen.

Ein synchronisierter Ablauf dieser Arbeitsschritte unterstützt eine Koordinierung von Bearbeitungs- bzw. Herstellungsprozessen für die Bearbeitung von Werkstücken oder die Herstellung von Produkten. Die Koordinierung der Arbeitsschritte verhindert, dass sich Bearbeitungsvorrichtungen für die Bearbeitung der Werkstücke bzw. Herstellungseinheiten für die Herstellung der Produkte beispielsweise bei parallel ablaufenden Arbeitsschritten gegenseitig behindern oder bei seriell ablaufenden Arbeitsschritten unnötig lang in einer Warteposition verharren, bis der nächste Arbeitsschritt der Bearbeitung bzw. der Herstellung erfolgt.

Da sich entsprechende Anforderungen und die damit verbundenen Probleme sowohl für die Bearbeitung von Werkstücken mittels Werkzeugmaschinen wie auch für die Herstellung von Produkten mittels Produktionsmaschinen - hier können jeweils auch Roboter zum Einsatz kommen - gleich sind, werden sich die weiteren Betrachtungen im genannten Kontext auf die Bearbeitung von Werkstücken fokussieren, wobei dies die Herstellung von Produkten mit umfasst.

In diesem Zusammenhang ist demnach die Herstellung des Produkts analog der Bearbeitung des Werkstücks zu verstehen.

Einhergehend mit der Bearbeitung eines Werkstückes ist es meist gegeben, dass sich zumindest eine das Werkstück bearbeitende Bearbeitungsvorrichtung in einem ihrer Arbeitsschritte eine Bewegung ausführt und oder das zu bearbeitende Werkstück sich während des Arbeitsschrittes bewegt bzw. bewegt wird.

Ein Beispiel für die Bearbeitung des Werkstücks ist, dass eine erste Bearbeitungsvorrichtung das Werkstück mittels eines beweglichen Fräswerkzeugs ausbildet, wobei eine zweite Bearbeitungsvorrichtung mittels einer beweglichen oder feststehenden Saugvorrichtung die abgefrästen Späne absaugt.

Eine koordinierte Bearbeitung des Werkstückes mittels der beiden Bearbeitungsvorrichtungen ist demnach eine Anforderung, welche es erforderlich machen, die entsprechenden Arbeitsschritte der jeweiligen Bearbeitungsvorrichtungen miteinander zu synchronisieren.

Synchronisieren kann in diesem Kontext einerseits bedeuten, dass der Arbeitsschritt des Absaugens der abgefrästen Späne mittels der zweiten Bearbeitungsvorrichtung zumindest teilweise parallel zu dem Arbeitsschritt des Fräsvorgangs mittels der ersten Bearbeitungsmaschine durchgeführt wird.

Für dieses Beispiel steht meist die Herausforderung bei der Bearbeitung des Werkstücks im Vordergrund, dass sich beide Bearbeitungsvorrichtungen wie bereits erwähnt nicht behindern, was zu einer Beschädigung oder der Zerstörung der Bearbeitungsvorrichtungen bzw. des Werkstücks führen könnte.

Synchronisiert kann in diesem Kontext andererseits auch bedeuten, dass der Arbeitsschritt des Fräsens am Werkstück mittels der ersten Bearbeitungsvorrichtung bereits abgeschlossen ist, bevor das Absaugen der abgefrästen Späne mittels der Absaugvorrichtung durchgeführt wird. Bei diesem Beispiel steht oft die Herausforderung bei der Bearbeitung des Werkstücks im Vordergrund, dass der Arbeitsschritt des Fräsvorgangs am Werkstück so schnell wie möglich in den Arbeitsschritt der Absaugung der abgefrästen Späne am Werkstück übergeht.

Weiterhin ist für die koordinierte Bearbeitung des Werkstücks - und die damit verbundenen Synchronisierungsanforderungen - zu berücksichtigen, ob ggf. identische Bedingungen vorherrschen, wie z.B. bei gleicher Bewegungsführung von mindestens zwei Bearbeitungsvorrichtungen unter dem Einsatz gleicher Bearbeitungsvorrichtungen - umfassend die zur Bearbeitung des Werkstücks eingesetzten gleichen Werkzeuge - mit jeweils separaten Bearbeitungsräumen oder nicht.

Liegt ein eher weniger komplexer Fall von überwiegend identischen Bedingungen vor, können insbesondere mit Blick auf die gleiche Bewegungsführung der Bearbeitungsvorrichtungen in unterschiedlichen Bearbeitungsräumen zwei identische Arbeitsschritte zumindest teilweise parallel durchgeführt werden.

Bei identischen Arbeitsschritten können von einer Steuerungs- bzw. Reglungseinheit zu jeder der zwei Bearbeitungsvorrichtungen beispielsweise taktsynchrone Sollwerte vorgegeben und so die synchrone Abarbeitung der jeweiligen Arbeitsschritte durchgeführt werden.

Oftmals sind jedoch nicht identische Bedingungen zur Koordinierung mit einem erhöhten Synchronisierungsaufwand der Arbeitsschritte der Bearbeitungsvorrichtungen für die Bearbeitung des Werkstücks zu erwarten. Das betrifft einerseits den Einsatz verschiedener Bearbeitungsvorrichtungen - mit teilweise verschiedenen Werkzeugen - sowie andererseits sich überlabende Bearbeitungsräume für die sich meist bewegenden Bearbeitungsvorrichtungen, so dass verschiedene Sollwerte für die beteiligten Bearbeitungsvorrichtungen bereitgestellt werden müssen.

Der Begriff Synchron und dessen Ableger, wie Synchronität oder Synchronisierung haben in diesem Zusammenhang ebenfallihre Berechtigung, da es in diesem Kontext um gegenseitig zeitlich abgestimmte Vorgänge der Bearbeitung von Arbeitsschritten für die verschiedenen Bearbeitungsvorrichtungen geht, was nicht zwangsläufig parallel erfolgen muss, sondern auch seriell erfolgen kann.

Ein alleiniger Einsatz von taktsynchronen Sollwerten bei der Durchführung der entsprechenden Arbeitsschritte für die jeweiligen Bearbeitungsvorrichtungen reicht auch aufgrund der meist zu erwartenden - ggf. auch nur kleinen - unterschiedlichen räumlichen und mechanischen Gegebenheiten mit daraus resultierenden unterschiedlichen Wegstrecken - und dies selbst bei gleichen oder annähernd gleichen Arbeitsschritten - für eine koordinierte Bearbeitung des Werkstücks nicht aus.

So kann eine an sich geeignete Vergleichsgröße für die Synchronisierung der Arbeitsschritte der beteiligten Bearbeitungsvorrichtungen, wie z.B. eine abzufahrende Bahnlänge als entsprechenden Bezugsparameter in einer Werkzeugmaschine bei gleichem Bearbeitungsstart der beteiligten Bearbeitungsvorrichtungen, unter idealen, oftmals nur theoretisch zu erlangenden Bedingungen durchaus für die Synchronisierung geeignet erscheinen.

In der Praxis sind derartige Idealbedingungen oft nicht erreichbar, was im Allgemeinen zu unerwünschten Abweichungen der vorgegebenen Bearbeitungsmuster der beteiligten Bearbeitungsvorrichtungen bzgl. gefahrenem Weg und/oder benötigter Zeit während der Bearbeitung des Werkstücks führt, sowie ggf. ein gegeneinander Driften der beteiligten Bearbeitungsvorrichtungen verursachen kann.

Infolgedessen muss beispielsweise mit Konturverletzungen des Werkstücks - ausgelöst z.B. durch unerwünschte Kollisionen der Bearbeitungsvorrichtungen mit dem Werkstück - oder mit Kollisionen der Bearbeitungsvorrichtungen untereinander gerechnet werden.

Zwar kann das gegeneinander Driften der Bearbeitungsvorrichtungen reduziert werden, indem unterschiedliche Blockzykluszeiten für die Regelung der Arbeitsschritte der Bearbeitungsvorrichtungen eine Befüllung eines Vorausschau-Puffers für eine Vorlaufbewegung oder eine Einführung eines sogenannten Genauhaltungs-Fensters aufgrund einer systematisch oder stochastisch unterschiedlichen Encoder-Erfassung bei rotatorischen Bewegungen implementiert werden. Jedoch führen derartige Implementierungen im Allgemeinen zu einer Begrenzung der Dynamik der beweglichen Bearbeitungsvorrichtungen oder einer beweglichen Werkstückvorrichtung.

Ferner kann mittels sogenannter Warte-Marken - z.B. implementiert in der Reglung einer Werkzeugmaschine oder einer Produktionsmaschine - eine zumindest punktuelle Synchronisierung der Arbeitsschritte der jeweiligen Bearbeitungsvorrichtungen erfolgen. Diese Vorgehensweise erlaubt jedoch zwischen den Warte-Marken keine Aussage über den Status der Synchronisierung und somit auch nicht zum koordinierten Ablauf der Arbeitsschritte für die jeweiligen Bearbeitungsvorrichtungen. Daher kann beim Einsatz der Warte-Marken ebenfalls ein unerwünschtes gegeneinander Driften der Bearbeitungsvorrichtungen auftreten. Darüber hinaus erfolgt erst an den Warte-Marken eine zum Teil harte bzw. abrupte Synchronisierung der beteiligten Bearbeitungsvorrichtungen und/oder der Werkstückvorrichtung.

Neben den negativen Folgen für eine mechanische Unversehrtheit der Bearbeitungsvorrichtungen und/oder der Werkstückvorrichtung sind deshalb auch Beeinträchtigungen der Bearbeitungsqualität des Werkstücks erwartbar.

Der Erfindung liegt die Aufgabe zugrunde, ein gegenüber dem Stand der Technik verbessertes Synchronisierungsverfahren zur koordinierten Ausführung von Arbeitsschritten für eine Bearbeitung eines Werkstücks sowie eine Bearbeitungsmaschine und ein Bearbeitungsmaschinensystem mit dem Synchronisierungsverfahren sowie ein Computerprogrammprodukt für eine zumindest teilweise Ausführung des Synchronisierungsverfahrens vorzuschlagen.

Die Aufgabe wird durch ein Synchronisierungsverfahren mit den in Anspruch 1 angegebenen Merkmalen, eine Bearbeitungsmaschine mit dem Synchronisierungsverfahren nach den in Anspruch 13 angegebenen Merkmalen, ein Bearbeitungsmaschinensystem mit dem Synchronisierungsverfahren nach den in Anspruch 14 angegebenen Merkmalen sowie ein Computerprogrammprodukt für eine zumindest teilweise Ausführung des Synchronisierungsverfahrens gemäß den in Anspruch 15 angegebenen Merkmalen gelöst.

Für die Lösung der Aufgabe wird ein Synchronisierungsverfahren zur koordinierten Ausführung von Arbeitsschritten für eine Bearbeitung eines Werkstücks vorgeschlagen, wobei eine erste Bearbeitungsvorrichtung einer Bearbeitungsmaschine einen ersten Arbeitsschritt ausführt, wobei eine zweite Bearbeitungsvorrichtung der Bearbeitungsmaschine oder einer weiteren Bearbeitungsmaschine einen zweiten Arbeitsschritt ausführt, wobei der erste Arbeitsschritt einen ersten Synchronisierungsparameter und der zweite Arbeitsschritt einen zweiten Synchronisierungsparameter aufweist, wobei der erste und zweite Synchronisierungsparameter auf einem Bearbeitungsparameter für die Bearbeitung des Werkstücks basieren, wobei in einem Vergleich der erste Synchronisierungsparameter kontinuierlich mit dem zweiten Synchronisierungsparameter verglichen wird und wobei die koordinierte Ausführung von erstem und zweitem Arbeitsschritt in Abhängigkeit vom Ergebnis des Vergleichs durchgeführt wird.

Mit Einführung des ersten und zweiten Synchronisierungsparameters in die entsprechenden Arbeitsschritte der jeweiligen Bearbeitungsvorrichtungen der zumindest einen Bearbeitungsmaschine wird nunmehr ein für die Synchronisierung und im Ergebnis dessen für die koordinierte Ausführung der Arbeitsschritte direkter und kontinuierlicher Synchronisierungsbezug zu dem als führende Größe für die Bearbeitung des Werkstücks eingeführten Bearbeitungsparameter hergestellt.

Dieser Bearbeitungsparameter kann sowohl technologische Prozesseigenschaften zur Bearbeitung des Werkstücks - z.B. eine übergeordnete Ablaufreihenfolge der Arbeitsschritte - wie auch technische Eigenschaften - z.B. die abzufahrende Bahnlänge einer Bearbeitungsstrecke der Werkzeugmaschine für die Bearbeitung des Werkstücks in Form einer Stellgröße für den einen Vorschub des Werkstücks oder der Werkzeuge der Bearbeitungsvorrichtungen - aufweisen.

Die auf dem Bearbeitungsparameter basierenden Synchronisierungsparameter für die entsprechenden Arbeitsschritte der jeweiligen Bearbeitungsvorrichtungen werden kontinuierlich miteinander verglichen, so dass je nach Ergebnis des Vergleichs die betroffenen Arbeitsschritte bzgl. ihrer Bearbeitungsaktivitäten an die Vergleichssituation angepasst werden oder mit Blick auf die Synchronisierung anpassungsfrei weiterverfolgt werden.

Mittels der zumindest während der Ausführung der Arbeitsschritte kontinuierlich fortlaufenden Synchronisierung wird in vorteilhafter Weise der koordinierte Ablauf dieser Arbeitsschritte für die jeweiligen Bearbeitungsvorrichtungen erzeugt, welcher es erlaubt, den Bearbeitungsprozess der Bearbeitung des Werkstücks gegenüber bekannten Lösungen weiter zu optimieren.

Die Gefahr des gegeneinander Driftens bzw. des gegeneinander Arbeitens der Bearbeitungsvorrichtungen, mit der möglichen Konsequenz einer Beschädigung oder Zerstörung der Bearbeitungsvorrichtungen (umfassend das Werkzeug und/oder das Werkstück), kann demnach - auch unter Verkürzung bzw. zumindest Beibehaltung der gegenüber bekannten Synchronisierungs- oder Bearbeitungsverfahren notwendigen Bearbeitungszeiten des Werkstücks - vermieden oder zumindest weiter reduziert werden.

Vorteilhafte Ausgestaltungsformen des Synchronisierungsverfahrens sind in den abhängigen Ansprüchen angegeben.

Bei einer ersten vorteilhaften Ausgestaltungsform des Synchronisierungsverfahrens basiert der erste Synchronisierungsparameter des ersten Arbeitsschritts auf dem als ein Bearbeitungssollwert ausgebildeten Bearbeitungsparameter.

Der Bearbeitungssollwert für die Bearbeitung des Werkstücks wird in der Regel in einer Regelungseinheit gebildet bzw. von ihr ausgegeben, wobei die Regelungseinheit vorzugsweise von der Bearbeitungsmaschine umfasst wird. Jedoch können auch eine oder alle der Bearbeitungsvorrichtungen eine derartige Regelungseinheit aufweisen.

Der Bearbeitungssollwert ist der für die Bearbeitung des Werkstücks vorgesehene technisch und/oder technologisch geprägte Bearbeitungsparameter, wie z.B. eine Stellgröße der abzufahrenden Bahn für den Vorschub des Werkzeugs und/oder des Werkstücks an der Werkzeugmaschine.

Oft ist eine Vorrichtungstopologie zur Durchführung des Synchronisierungsverfahrens - wie auch generell zur Durchführung der Bearbeitung des Werkstücks - derart eingerichtet, dass alle beteiligten Bearbeitungsvorrichtungen mit ihren entsprechenden Werkzeugen - wie auch eine Werkzeugvorrichtung zum Fixieren und/oder Bewegen des Werkstücks - in der Bearbeitungsmaschine angeordnet sind.

Falls jedoch die Bearbeitungsvorrichtungen auf verschiedene Bearbeitungsmaschinen verteilt sind, kann mittels einer Kommunikationseinheit ein Datenaustausch zwischen den beiden Bearbeitungsmaschinen vorgesehen sein, um den Bearbeitungsparameter - hier als Bearbeitungssollwert, welcher beispielsweise mittels einer Regelung einer Reglungseinheit in zumindest einer der Bearbeitungsmaschinen erzeugt wurde - zwischen den Bearbeitungsmaschinen zu übermitteln.

Bei einer weiteren vorteilhaften Ausgestaltungsform des Synchronisierungsverfahrens basiert der zweite Synchronisierungsparameter des zweiten Arbeitsschritts auf einem als ein Simulationssollwert für den Bearbeitungssollwert ausgebildeten Bearbeitungsparameter oder auf einem als ein abhängiger Bearbeitungssollwert für den Bearbeitungssollwert ausgebildeten Bearbeitungsparameter.

Wenn der zweite Synchronisierungsparameter auf dem Simulationssollwert des als Bearbeitungssollwert ausgebildeten Bearbeitungsparameters basiert, muss der Datenaustausch zwischen den beiden Bearbeitungsmaschinen und/oder den beiden Bearbeitungsvorrichtungen zumindest nicht permanent erfolgen, was sowohl aus Sicht der Kommunikationsvorrichtung wie auch aus Sicht eines für den Datenaustausch benötigten Datenvolumens Einsparpotential bietet und die Komplexität des Synchronisierungsverfahren begrenzt.

Im Falle, dass für den als Bearbeitungssollwert ausgebildeten Bearbeitungsparameter der abhängige Bearbeitungssollwert vorgesehen ist, kann ein als Master-Slave-Modell bekanntes Datenaustauschsystem eingesetzt werden, wobei als eine sprachliche Alternative das Primary-Replica-Modell hier im Folgenden verwendet wird (Master -> Primary; Slave -> Replica), welches das obige Master-Slave-Modell inhaltlich vollumfänglich ersetzt.

Dieses Primary-Replica-Modell ist derart ausgelegt, dass der abhängige Bearbeitungssollwert als Replica-Anteil dem Bearbeitungssollwert als Primary-Anteil des Modells folgt.

Bei einer weiteren vorteilhaften Ausgestaltungsform des Synchronisierungsverfahrens wird der Simulationssollwert während der Durchführung des zweiten Arbeitsschrittes ermittelt.

Der Einsatz des Simulationssollwerts erlaubt unter diesen Bedingungen, den auf dem Bearbeitungssollwert basierten zweiten Synchronisierungsparameter während der Bearbeitung des Werkstücks im zweiten Arbeitsschritt, unabhängig von der fortlaufenden Kenntnis des Bearbeitungssollwerts als real vorgegebene Bearbeitungsgröße, nachzubilden, so dass in vorteilhafter Weise die zweite Bearbeitungsvorrichtung unter Ablauf des zweiten Arbeitsschritts im Wesentlichen autark betrieben wird.

Bei einer weiteren vorteilhaften Ausgestaltungsform des Synchronisierungsverfahrens wird bei einer im Ergebnis des Vergleichs ermittelten Ungleichheit der Synchronisierungsparameter eine Bearbeitungsänderung in zumindest einem der Arbeitsschritte für deren jeweils zugeordnete Bearbeitungsvorrichtungen durchgeführt.

Eine Ungleichheit der Synchronisierungsparameter hat demnach zur Folge, dass die Bearbeitungsänderung in vorteilhafter Weise räumliche und/oder zeitliche Bearbeitungsanforderungen mit sowohl technischem wie auch prozessualen Charakter für die Arbeitsschritte der entsprechenden Bearbeitungsvorrichtungen vorgibt, was im Ergebnis die geforderte Synchronität zur koordinierten Ausführung der Arbeitsschritte für die Bearbeitung des Werkstücks herstellt.

Von dieser Bearbeitungsänderung an - bis zur Herstellung der Synchronität - können einerseits beide Arbeitsschritte der entsprechenden Bearbeitungsvorrichtungen betroffen sein wie andererseits auch nur einer der Arbeitsschritte.

Bei einer weiteren vorteilhaften Ausgestaltungsform des Synchronisierungsverfahrens wird im Fall, dass die erste Bearbeitungsvorrichtung als eine erste Werkzeugvorrichtung mit einem ersten Werkzeug ausgebildet ist, bei Ungleichheit der Synchronisierungsparameter als Bearbeitungsänderung eine erste Bearbeitungsgeschwindigkeit oder deren Derivate, mittels der das erste Werkzeug das Werkstück bearbeitet, geändert.

Als Bearbeitungsänderung der ersten Bearbeitungsgeschwindigkeit wird jegliche Änderung der Geschwindigkeit zur Bearbeitung des Werkstücks angenommen, welche in diesem Fall die erste Bearbeitungsgeschwindigkeit für das erste Werkzeug - beispielsweise einen ersten Schweißkopf - betrifft und mittels der ersten Werkzeugvorrichtung der ersten Bearbeitungsvorrichtung - beispielsweise einem ersten Schweißroboter einer Schweißmaschine - ausgeführt wird.

Um die Synchronität des ersten Arbeitsschritts der ersten Bearbeitungsvorrichtung mit dem zweiten Arbeitsschritt der zweiten Bearbeitungsvorrichtung herzustellen, kann die erste Bearbeitungsgeschwindigkeit am ersten Werkzeug bei Ungleichheit der Synchronisierungsparameter erhöht aber auch reduziert werden.

Die Bearbeitungsänderung in ihrer Ausbildung als Änderung der ersten Bearbeitungsgeschwindigkeit am ersten Werkzeug der ersten Werkzeugvorrichtung zur Herstellung der Synchronität der Arbeitsschritte der Bearbeitungsvorrichtungen umfasst auch Derivate der ersten Bearbeitungsgeschwindigkeit (nach der Zeit), wie Bearbeitungsbeschleunigung oder Bearbeitungsruck.

Ferner kann die erste Bearbeitungsgeschwindigkeit für den Bearbeitungsprozess des Werkstücks auch derart als Bearbeitungsgröße ausgebildet sein, dass ohne eine Bewegung des ersten Werkzeugs dennoch die Synchronität mittels beispielsweise einer Änderung eines Materialauftrags beim Schweißen oder Drucken des Werkstücks durchgeführt wird, indem mittels des ersten Werkzeugs mehr oder weniger Schweiß- oder Druckmaterial auf das Werkstück aufgetragen wird.

Bei einer weiteren vorteilhaften Ausgestaltungsform des Synchronisierungsverfahrens wird im Fall, dass die zweite Bearbeitungsvorrichtung eine zweite Werkzeugvorrichtung mit einem zweiten Werkzeug aufweist, bei Ungleichheit der Synchronisierungsparameter als Bearbeitungsänderung eine zweite Bearbeitungsgeschwindigkeit oder deren Derivate, mittels der das zweite Werkzeug das Werkstück bearbeitet, geändert.

Als zweite Bearbeitungsgeschwindigkeit und deren Bearbeitungsänderung wird jegliche Änderung der Geschwindigkeit zur Bearbeitung des Werkstücks angenommen, welche in diesem Fall die zweite Bearbeitungsgeschwindigkeit für das zweite Werkzeug - beispielsweise einen zweiten Schweißkopf - betrifft und mittels der zweiten Werkzeugvorrichtung der zweiten Bearbeitungsvorrichtung - beispielsweise einem zweiten Schweißroboter einer Schweißmaschine - ausgeführt wird.

Um die Synchronität für den ersten Arbeitsschritt der ersten Bearbeitungsvorrichtung mit dem zweiten Arbeitsschritt der zweiten Bearbeitungsvorrichtung herzustellen, kann die zweite Bearbeitungsgeschwindigkeit am zweiten Werkzeug bei Ungleichheit der Synchronisierungsparameter erhöht aber auch reduziert werden.

Die Bearbeitungsänderung in ihrer Ausbildung als Änderung der zweiten Bearbeitungsgeschwindigkeit am zweiten Werkzeug der zweiten Werkzeugvorrichtung zur Herstellung der Synchronität der Arbeitsschritte der Bearbeitungsvorrichtungen umfasst auch Derivate der zweiten Bearbeitungsgeschwindigkeit (nach der Zeit), wie Bearbeitungsbeschleunigung oder Bearbeitungsruck.

Ferner kann die zweite Bearbeitungsgeschwindigkeit für den Bearbeitungsprozess des Werkstücks auch derart als Bearbeitungsgröße ausgebildet sein, dass ohne eine Bewegung des zweiten Werkzeugs dennoch die Synchronität mittels beispielsweise der Änderung des Materialauftrags beim z.B. Schweißen oder Drucken des Werkstücks durchgeführt wird, indem mittels des zweiten Werkzeugs mehr oder weniger Schweiß- oder Druckmaterial auf das Werkstück aufgetragen wird.

Bei einer weiteren vorteilhaften Ausgestaltungsform des Synchronisierungsverfahrens werden im Fall, dass die zweite Bearbeitungsvorrichtung eine Werkstückvorrichtung mit dem Werkstück aufweist, bei Ungleichheit der Synchronisierungsparameter als Bearbeitungsänderung eine dritte Bearbeitungsgeschwindigkeit oder deren Derivate, mittels der die Werkstückvorrichtung das Werkstück gegenüber dem ersten Werkzeug bewegt, geändert.

Auch hier wird als zweite Bearbeitungsgeschwindigkeit und deren Bearbeitungsänderung jegliche Änderung der Geschwindigkeit zur Bearbeitung des Werkstücks angenommen, welche in diesem Fall die zweite Bearbeitungsgeschwindigkeit für das Werkstück betriff und mittels der Werkstückvorrichtung mit dem Werkstück - hier die Werkstückvorrichtung als Aufnahme des Werkstücks beispielsweise für die Bearbeitung mittels mindestens einem Schweißroboter einer Schweißmaschine - ausgeführt wird.

Um die Synchronität des ersten Arbeitsschritts der ersten Bearbeitungsvorrichtung mit dem zweiten Arbeitsschritt der zweiten Bearbeitungsvorrichtung herzustellen, kann die zweite Bearbeitungsgeschwindigkeit an der Werkstückvorrichtung mit dem Werkstück bei Ungleichheit der Synchronisierungsparameter erhöht aber auch reduziert werden.

Die Bearbeitungsänderung in ihrer Ausbildung als Änderung der dritten Bearbeitungsgeschwindigkeit am Werkstück der Werkstückvorrichtung zur Herstellung der Synchronität der Arbeitsschritte der Bearbeitungsvorrichtungen umfasst auch Derivate der dritten Bearbeitungsgeschwindigkeit (nach der Zeit), wie Bearbeitungsbeschleunigung oder Bearbeitungsruck.

Ferner kann die zweite Bearbeitungsgeschwindigkeit für den Bearbeitungsprozess des Werkstücks auch derart als Bearbeitungsgröße ausgebildet sein, dass ohne eine Bewegung des zweiten Werkstücks der Werkstückvorrichtung dennoch die Synchronität mittels beispielsweise der Änderung des Materialauftrags beim z.B. Schweißen oder Drucken des Werkstücks durchgeführt wird, indem beispielsweise mittels des ersten Werkzeugs mehr oder weniger Schweiß- oder Druckmaterial auf das Werkstück aufgetragen wird.

Die Bearbeitungsänderungen mittels der Bearbeitungsgeschwindigkeit zur Herstellung der Synchronität in Bezug auf die erste Bearbeitungsvorrichtung mit dem ersten Werkzeug, die zweite Bearbeitungsvorrichtung mit dem zweiten Werkzeug oder die zweite Bearbeitungsvorrichtung mit dem Werkstück erlaubt in vorteilhafter Weise verschiedene Bearbeitungsszenarien. Dabei ist die zweite Bearbeitungsgeschwindigkeit der zweiten Bearbeitungsvorrichtung auf das zweite Werkzeug der zweiten Werkzeugvorrichtung oder auf das Werkstück der Werkstückvorrichtung anzuwenden.

So wird in einem ersten Bearbeitungsszenario nur die erste Bearbeitungsgeschwindigkeit für die erste Bearbeitungsvorrichtung bei Ungleichheit der Synchronisierungsparameter zur Herstellung der Synchronität geändert, die Bearbeitungsgeschwindigkeit für die zweite Bearbeitungsvorrichtung bleibt unverändert.

In einem zweiten Bearbeitungsszenario wird nur die zweite Bearbeitungsgeschwindigkeit für die zweite Bearbeitungsvorrichtung bei Ungleichheit der Synchronisierungsparameter zur Herstellung der Synchronität geändert, die Bearbeitungsgeschwindigkeit für die erste Bearbeitungsvorrichtung bleibt unverändert.

In einem dritten Bearbeitungsszenario wird sowohl die erste Bearbeitungsgeschwindigkeit für die erste Bearbeitungsvorrichtung wie auch die zweite Bearbeitungsgeschwindigkeit für die zweite Bearbeitungsvorrichtung bei Ungleichheit der Synchronisierungsparameter zur Herstellung der Synchronität geändert.

Bei einer weiteren vorteilhaften Ausgestaltungsform des Synchronisierungsverfahrens wird der erste Arbeitsschritt mittels eines ersten Teilprogramms und der zweite Arbeitsschritt mittels eines zweiten Teilprogramms durchgeführt und umfasst ein Bearbeitungsprogramm zumindest eines der Teilprogramme für entsprechend einen der Arbeitsschritte und ein Vergleichsprogramm für den Vergleich der Synchronisierungsparameter.

Somit kann das Bearbeitungsprogramm z.B. übergreifend in Bezug auf die Bearbeitungsvorrichtungen mittels der einen Bearbeitungsmaschine, also bei einem zentralen Aufbau, implementiert werden, was eine Komplexität der Softwaretopologie aber auch die Komplexität der Topologie der dafür benötigten Prozessoreinheiten (Reglungseinheiten) verringert.

Jedoch kann das erste Teilprogramm und das Vergleichsprogramm gemeinsam implementiert in dem Bearbeitungsprogramm einer Reglungseinheit der ersten Bearbeitungsvorrichtung ablaufen, wobei das zweite Teilprogramm separat implementiert in einer weiteren Reglungseinheit der zweiten Bearbeitungsvorrichtung abläuft. Dies unterstützt einen dezentralen Aufbau der beiden Bearbeitungsvorrichtungen z.B. mittels der Bearbeitungsmaschine und der weiteren Bearbeitungsmaschine.

Bei einer weiteren vorteilhaften Ausgestaltungsform des Synchronisierungsverfahrens wird das Vergleichsprogramm in einem der Teilprogramme ausgeführt.

Die Implementierung des Vergleichsprogrammes in einem der Teilprogramme reduziert weiter in vorteilhafter Weise die Komplexität der Softwaretopologie zur Durchführung der Arbeitsschritte jeweiligen Bearbeitungsvorrichtungen sowie des Vergleichs der Synchronisierungsparameter.

Bei einer weiteren vorteilhaften Ausgestaltungsform des Synchronisierungsverfahrens werden die Arbeitsschritte und der Vergleich mittels einer Cloud-Applikation in einer Cloud ausgeführt.

Durch die Auslagerung der Arbeitsschritte - der Teilprogramme - und des Vergleichs - des Vergleichsprogramms - welche als Cloud-Applikation beispielweise in Form des Bearbeitungsprogramms in der Cloud implementiert sind, reduziert in vorteilhafter Weise den Aufwand an benötigter Rechenleistungen (Hardware und Software) gegenüber den Bearbeitungsvorrichtungen der Bearbeitungsmaschine oder der Bearbeitungsmaschinen.

Bei einer weiteren vorteilhaften Ausgestaltungsform des Synchronisierungsverfahrens sind zumindest die erste Bearbeitungsvorrichtung und die zweite Bearbeitungsvorrichtung als digitale Zwillinge in der Cloud hinterlegt und für die Cloud-Applikation zur Ausführung der Arbeitsschritte und des Vergleichs vorbereitet.

Mittels der Hinterlegung zumindest der Bearbeitungsvorrichtungen als digitale Zwillinge in der Cloud - im Allgemeinen auch als Bestandteil der Bearbeitungsmaschine oder der Bearbeitungsmaschinen - kann beispielsweise eine Simulation zur Bearbeitung des Werkstücks unter Einsatz des Synchronisierungsverfahrens für die koordinierte Ausführung der Arbeitsschritte durchgeführt werden. Dies hat in vorteilhafter Weise Einfluss auf die Qualität der Bearbeitung des Werkstücks und die Reduzierung der Durchlaufzeit unter realen Bearbeitungsbedingungen.

Für die Lösung der Aufgabe wird weiterhin eine Bearbeitungsmaschine für eine Bearbeitung eines Werkstücks vorgeschlagen, umfassend eine erste Bearbeitungsvorrichtung mit einem ersten Synchronisierungsparameter in einem ersten Arbeitsschritt, eine zweite Bearbeitungsvorrichtung mit einem zweiten Synchronisierungsparameter in einem zweiten Arbeitsschritt und eine Reglungseinheit für eine Durchführung eines Vergleichs der beiden Synchronisierungsparameter und eine Umsetzung der Arbeitsschritte gemäß dem erfindungsgemäßen Synchronisierungsverfahren zur koordinierten Ausführung der Arbeitsschritte für die Bearbeitung des Werkstücks.

Für die Lösung der Aufgabe wird ebenfalls ein Bearbeitungsmaschinensystem für eine Bearbeitung eines Werkstücks vorgeschlagen, umfassend eine erste Bearbeitungsvorrichtung einer Bearbeitungsmaschine mit einem ersten Synchronisierungsparameter in einem ersten Arbeitsschritt, eine zweite Bearbeitungsvorrichtung einer weiteren Bearbeitungsmaschine mit einem zweiten Synchronisierungsparameter in einem zweiten Arbeitsschritt und eine Reglungseinheit für eine Durchführung eines Vergleichs der beiden Synchronisierungsparameter und eine Umsetzung der Arbeitsschritte gemäß dem erfindungsgemä-ßen Synchronisierungsverfahren zur koordinierten Ausführung der Arbeitsschritte für die Bearbeitung des Werkstücks.

Ferner wird für die Lösung der Aufgabe ein Computerprogrammprodukt vorgeschlagen, welches zur zumindest teilweisen Ausführung des erfindungsgemäßen Synchronisierungsverfahrens ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung des erfindungsgemäßen Synchronisierungsverfahrens zur koordinierten Ausführung von Arbeitsschritten für eine Bearbeitung eines Werkstücks,
- FIG 2: eine zweite schematische Darstellung des erfindungsgemäßen Synchronisierungsverfahrens gemäß FIG 1, ausgeführt in einer Reglungseinheit,
- FIG 3: eine dritte schematische Darstellung des erfindungsgemäßen Synchronisierungsverfahrens gemäß FIG 1, ausgeführt in einer Cloud,
- FIG 4: eine schematische Darstellung einer Bearbeitungsmaschine, ausgebildet als Schweißmaschine, für die Durchführung des erfindungsgemäßen Synchronisierungsverfahrens und
- FIG 5: eine schematische Darstellung eines Bearbeitungsmaschinensystems, ausgebildet mit einer Bearbeitungsmaschine als eine Schweißmaschine und einer weiteren Bearbeitungsmaschine als eine weitere Schweißmaschine, für die Durchführung des erfindungsgemäßen Synchronisierungsverfahrens.

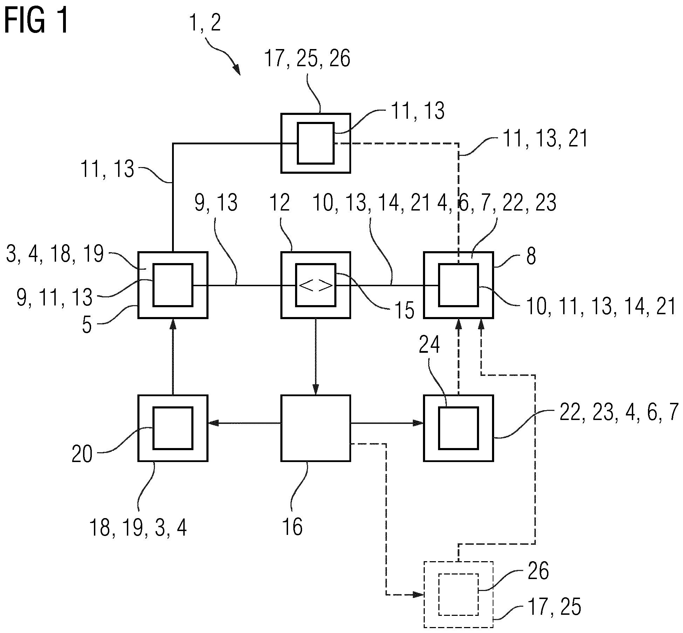

Die FIG 1 zeigt eine schematische Darstellung des erfindungsgemäßen Synchronisierungsverfahrens 1 zur koordinierten Ausführung 2 von Arbeitsschritten 5,6 für eine Bearbeitung eines Werkstücks 17.

Für eine erste Bearbeitungsvorrichtung 3 einer Bearbeitungsmaschine 4 wird ein erster Arbeitsschritt 5 ausführt. Der erste Arbeitsschritt 5 enthält einen ersten Synchronisierungsparameter 9, welcher auf einem als Bearbeitungssollwert 13 ausgebildeten Bearbeitungsparameter 11 basiert.

Bei einer zweiten Bearbeitungsvorrichtung 6 der Bearbeitungsmaschine 4 oder einer weiteren Bearbeitungsmaschine 7 wird ein zweiter Arbeitsschritt 8 ausführt. Der zweite Arbeitsschritt 8 enthält einen zweiten Synchronisierungsparameter 10, welcher auf einem als Simulationssollwert 14 oder als abhängigen Bearbeitungssollwert 21 ausgebildeten Bearbeitungsparameter 11 basiert.

Die Bearbeitungsvorrichtung 3 weist eine erste Werkzeugvorrichtung 18 mit einem ersten Werkzeug 19 auf, die zweite Bearbeitungsvorrichtung 6 weist eine zweite Werkzeugvorrichtung 22 mit einem zweiten Werkzeug 23 auf, um ein Werkstück 17 auf einer Werkstückvorrichtung 25 zu bearbeiten.

Der als Bearbeitungssollwert 13 ausgebildete Bearbeitungsparameter 11 für den ersten Synchronisierungsparameter 9 im ersten Arbeitsschritt 5 entspricht beispielsweise einem Sollwert für einen Werkstückvorschub des Werkstücks 17 auf der Werkstückvorrichtung 25, welcher im Arbeitsschritt 5 der ersten Bearbeitungsvorrichtung 3 erzeugt wird. In diesem Ausführungsbeispiel unterliegen sowohl das erste Werkzeug 19 der ersten Werkzeugvorrichtung 18 der ersten Bearbeitungsvorrichtung 3 wie auch das Werkstück 17 der Werkstückvorrichtung 25 einer Bewegung, welchen der Sollwert für den Werkstückvorschub als Bearbeitungsparameter 11 als Basis dient.

Demzufolge ist eine Bewegung für die Bearbeitung des Werkstücks 17 durch das erste Werkzeug 19 der Werkzeugvorrichtung 18 der ersten Bearbeitungsvorrichtung 3 abgestimmt mit der Bewegung des Werkstücks 17 der Werkstückvorrichtung 25.

Jedoch soll auch die zweite Bearbeitungsvorrichtung 6 mit dem zweiten Werkzeug 23 der zweiten Werkzeugvorrichtung 22, in Bezug zu der ersten Bearbeitungsvorrichtung 3, das Werkstück 17 der Werkstückvorrichtung 25 synchron für die koordinierte Ausführung 2 der Arbeitsschritten 5,6 bearbeiten.

Der Bearbeitungsparameter 11 für den zweiten Synchronisierungsparameter 10 im zweiten Arbeitsschritt 8 - hier beispielhaft der Sollwert für den Vorschub des Werkstücks 17 der Werkstückvorrichtung 25 - ist jedoch im zweiten Arbeitsschritt 8 nicht, wie als Bearbeitungssollwert 13 im ersten Arbeitsschritt 5 der ersten Bearbeitungsvorrichtung 3 erzeugt, zwangsläufig bekannt. Der erste Synchronisierungsparameter 9 im ersten Arbeitsschritt 5 kann vom zweiten Synchronisierungsparameter 10 des zweiten Arbeitsschritts 8 während der Bearbeitung der Werkstücks 17 abweichen.

Für den zweiten Synchronisierungsparameter 10 des zweiten Arbeitsschritts 8 kann deshalb der als Bearbeitungssollwert 13 ausgebildete Bearbeitungsparameter 11 einerseits als Simulationssollwert 14 oder als abhängiger Bearbeitungssollwert 21 ermittelt werden.

Der Simulationssollwert 14 kann ferner während der Durchführung des zweiten Arbeitsschritts 8 für den zweiten Synchronisierungsparameter 10 ermittelt werden. Dazu wird beispielsweise beim Start der Simulation für den zweiten Synchronisierungsparameter 10 ein Startwert vorgegeben.

Für die Ermittlung des abhängigen Bearbeitungssollwerts 21 kann - wie oben bereits beschrieben - ein Primary-Replica-Modell eingesetzt werden, wobei als Primary hier der Bearbeitungssollwert 13 und als Replica der für den zweiten Synchronisierungsparameter 10 benötigte abhängige Bearbeitungssollwerts 21 benutzt wird.

Der erste Synchronisierungsparameter 9 wird mittels eines Vergleichs 12 mit dem zweiten Synchronisierungsparameter 10 kontinuierlich verglichen. Wird eine Ungleichheit 15 festgestellt, kann durch eine Bearbeitungsänderung 16 von verschiedenen Bearbeitungsgeschwindigkeiten 20,24,26 mittels dreier Bearbeitungsszenarien durchgeführt werden.

In einem ersten Bearbeitungsszenario wird zur Herstellung der Synchronität zwischen den beiden Bearbeitungsvorrichtungen 3,6 bei Ungleichheit 15 der Synchronisierungsparameter 9,10 als Bearbeitungsänderung 16 nur eine erste Bearbeitungsgeschwindigkeit 20 für das erste Werkzeug 19 der ersten Werkzeugvorrichtung 18 der ersten Bearbeitungsvorrichtung 3 geändert, die zweite Bearbeitungsgeschwindigkeit 24 für die zweite Bearbeitungsvorrichtung 6 des zweiten Werkzeugs 23 der zweiten Werkzeugvorrichtung 22 bleibt unverändert.

In einem zweiten Bearbeitungsszenario wird zur Herstellung der Synchronität zwischen den beiden Bearbeitungsvorrichtungen 3,6 bei Ungleichheit 15 der Synchronisierungsparameter 9,10 als Bearbeitungsänderung 16 nur eine zweite Bearbeitungsgeschwindigkeit 24 für das zweite Werkzeug 23 der zweiten Werkzeugvorrichtung 22 der zweiten Bearbeitungsvorrichtung 6 geändert, die erste Bearbeitungsgeschwindigkeit 20 für die erste Bearbeitungsvorrichtung 3 des ersten Werkzeugs 19 der ersten Werkzeugvorrichtung 18 bleibt unverändert.

In einem dritten Bearbeitungsszenario wird zur Herstellung der Synchronität zwischen den beiden Bearbeitungsvorrichtungen 3,6 bei Ungleichheit 15 der Synchronisierungsparameter 9,10 sowohl die erste Bearbeitungsgeschwindigkeit 20 für die erste Bearbeitungsvorrichtung 3 des ersten Werkzeugs 19 der ersten Werkzeugvorrichtung 18 wie auch die zweite Bearbeitungsgeschwindigkeit 24 für die zweite Bearbeitungsvorrichtung 6 des zweiten Werkzeugs 23 der zweiten Werkzeugvorrichtung 22 geändert.

Denkbar ist auch eine Ausbildung der Bearbeitungsvorrichtungen 3,6 derart, dass die erste Bearbeitungsvorrichtung 3 das erste Werkzeug 19 der ersten Werkzeugvorrichtung 18 aufweist und die zweite Bearbeitungsvorrichtung 6 das Werkstück 17 der Werkstückvorrichtung 25 aufweist. In diesem Fall wird für die zweite Bearbeitungsvorrichtung 6 als Bearbeitungsänderung 16 eine dritte Bearbeitungsgeschwindigkeit 26, welche die zweite Bearbeitungsgeschwindigkeit 24, insbesondere in Bezug auf die vorhergehend beschriebenen drei Bearbeitungsszenarien, ersetzt und für den zweiten Arbeitsschritt 8 verwendet wird.

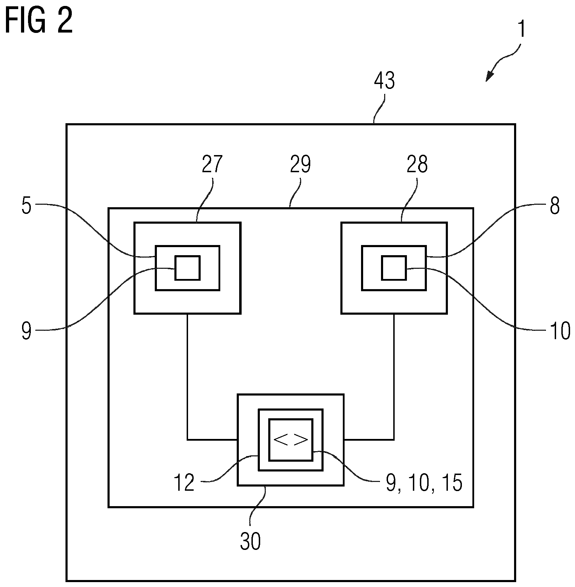

Mit FIG 2 wird eine zweite schematische Darstellung des erfindungsgemäßen Synchronisierungsverfahrens 1 auf Basis der FIG 1 aufgezeigt, wobei das Synchronisierungsverfahrens 1 in einer Reglungseinheit 43 ausgeführt wird.

Die Reglungseinheit 43 umfasst demnach ein Bearbeitungsprogramm 29 mit einem ersten Teilprogramm 27, einem zweiten Teilprogramm 28 und einem Vergleichsprogramm 30.

Mittels des ersten Teilprogramms 27 wird der erste Arbeitsschritt 5 ausgeführt, wobei der erste Arbeitsschritt 5 den ersten Synchronisierungsparameter 9 aufweist.

Mittels des zweiten Teilprogramms 28 wird der zweite Arbeitsschritt 8 ausgeführt, wobei der zweite Arbeitsschritt 8 den zweiten Synchronisierungsparameter 10 aufweist.

Das Vergleichsprogramm 30 vergleicht den ersten Synchronisierungsparameter 9 mit dem zweiten Synchronisierungsparameter 10 mittels des Vergleichs 12 auf Ungleichheit 15.

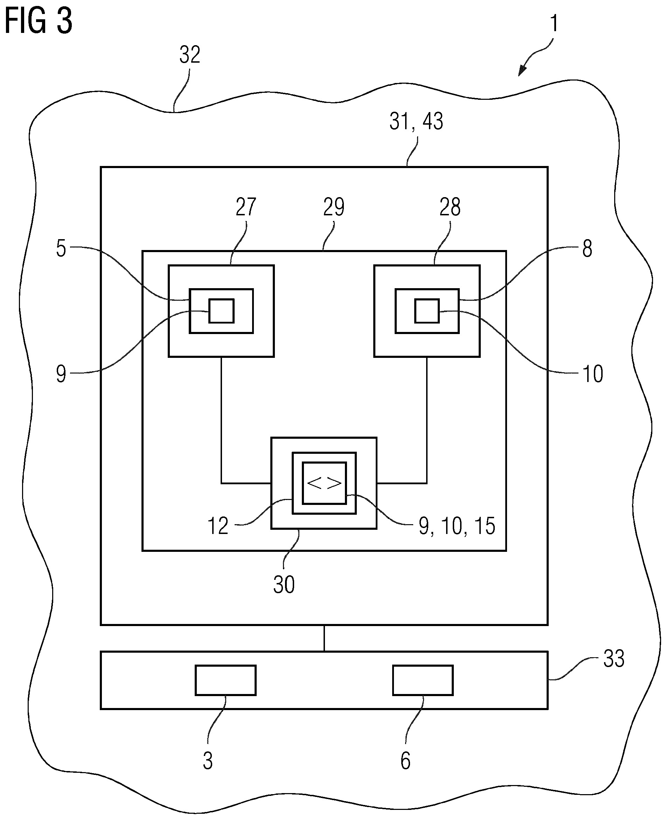

Die mittels der FIG 3 visualisierte dritte schematische Darstellung des erfindungsgemäßen Synchronisierungsverfahrens 1 gemäß FIG 1 zeigt die Ausführung das Synchronisierungsverfahrens 1 in einer Cloud.

In FIG 3 wird analog zu FIG 1 die Reglungseinheit 43 dargestellt, jedoch mit dem Unterschied, dass die Reglungseinheit 43 in einer Cloud 32 als Cloud-Applikation 31 ausgebildet ist.

Ferner sind die erste und die zweite Bearbeitungsvorrichtung 3,6 jeweils als digitaler Zwilling 33 ausgebildet, wobei das Synchronisierungsverfahren 1 zur koordinierten Ausführung von Arbeitsschritten für die Bearbeitung eines Werkstücks in Verbindung mit der Cloud-Applikation 31 beispielsweise simuliert werden kann.

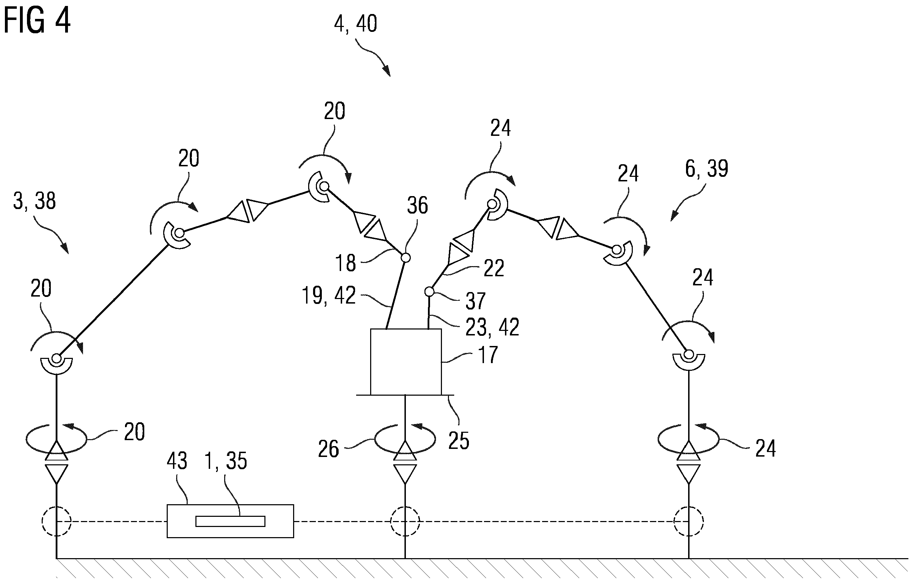

FIG 4 zeigt eine schematische Darstellung einer Bearbeitungsmaschine 4, ausgebildet als Schweißmaschine 40, für die Durchführung des erfindungsgemäßen Synchronisierungsverfahrens 1.

Die Bearbeitungsmaschine 4 ist im Ausführungsbeispiel als eine Schweißmaschine 40 ausgebildet. Sie umfasst eine erste Bearbeitungsvorrichtung 3, ausgebildet als ein erster Schweißroboter, eine zweite Bearbeitungsvorrichtung 6, ausgebildet als ein zweiter Schweißroboter 39 und eine Werkstückvorrichtung 25 mit einem zu bearbeitenden Werkstück 17, in diesem Beispiel zum Auftragen von Schweißnähten auf das Werkstück 17.

Der erste Schweißroboter 38 weist einen ersten Schweißkopf 36 mit Schweißmaterial 42 auf, der zweite Schweißroboter 39 weist einen zweiten Schweißkopf 37 mit Schweißmaterial 42 auf.

Der erste Schweißkopf 36 mit dem Schweißmaterial 42 bilden das erste Werkzeug 19 der ersten Werkzeugvorrichtung 18 der ersten Bearbeitungsvorrichtung 3 aus, der zweite Schweißkopf 37 mit dem Schweißmaterial 42 bilden das zweite Werkzeug 23 der zweiten Werkzeugvorrichtung 22 der zweiten Bearbeitungsvorrichtung 6 aus.

Eine Bearbeitungsänderung mittels der ersten Bearbeitungsvorrichtung 3 mit dem ersten Werkzeug 19 der ersten Werkzeugvorrichtung 18 kann durch die Änderung der ersten Bearbeitungsgeschwindigkeit 20 erfolgen und eine Bearbeitungsänderung mittels der zweiten Bearbeitungsvorrichtung 6 mit dem zweiten Werkzeug 23 der zweiten Werkzeugvorrichtung 22 kann durch die Änderung der zweiten Bearbeitungsgeschwindigkeit 24 erfolgen.

Im Ausführungsbeispiel der FIG 4 erfolgt die Bearbeitung des Werkstücks 17 der Werkstückvorrichtung 25 mittels einer dritten Bearbeitungsgeschwindigkeit 26, was der Ausführung des Synchronisierungsverfahrens 1 gemäß FIG 1 entspricht.

Das Synchronisierungsverfahren 1 wird mittels einer Reglungseinheit 43, hier auf Basis des Computerprogrammprodukts 35, durchgeführt.

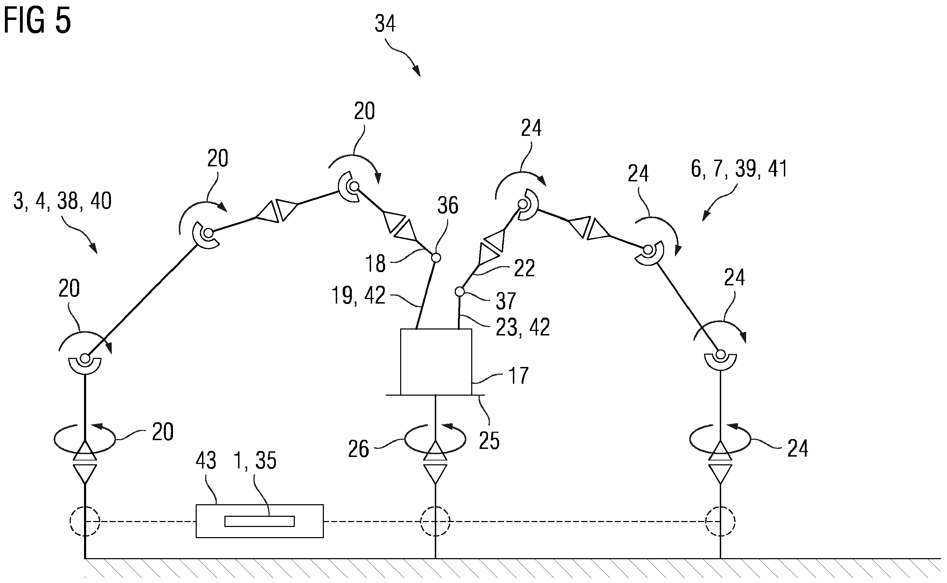

In der FIG 5 wird eine schematische Darstellung eines Bearbeitungsmaschinensystems 34, ausgebildet mit einer Bearbeitungsmaschine 4 als eine Schweißmaschine 40 und einer weiteren Bearbeitungsmaschine 7 als eine weitere Schweißmaschine 41, für die Durchführung des erfindungsgemäßen Synchronisierungsverfahrens aufgezeigt.

Die Bearbeitungsmaschine 4 des Bearbeitungsmaschinensystems 34 ist als Schweißmaschine 40 mit einem ersten Schweißroboter 38 (als eine erste Bearbeitungsvorrichtung 3), mit einem ersten Schweißkopf 36 und mit Schweißmaterial 42 (als ein erstes Werkzeug 19 einer ersten Werkzeugvorrichtung 18) ausgebildet.

Die weitere Bearbeitungsmaschine 7 des Bearbeitungsmaschinensystems 34 ist als weitere Schweißmaschine 41 mit einem zweiten Schweißroboter 39 (als eine zweite Bearbeitungsvorrichtung 6), mit einem zweiten Schweißkopf 37 und mit Schweißmaterial 42 (als ein zweites Werkzeug 23 einer zweiten Werkzeugvorrichtung 22) ausgebildet.

Darüber hinaus ist die Darstellung der FIG 5 wie die der FIG 4 zu betrachten, wobei die Bearbeitung des Werkstücks 17 der Werkstückvorrichtung 25 mittels einer dritten Bearbeitungsgeschwindigkeit 26 erfolgt, was der Ausführung des Synchronisierungsverfahrens 1 gemäß FIG 1 entspricht.

Das Synchronisierungsverfahren 1 wird mittels einer Reglungseinheit 43, hier auf Basis des Computerprogrammprodukts 35, für das Bearbeitungsmaschinensystem 34 durchgeführt.

## Patentansprüche

1. Synchronisierungsverfahren (1) zur koordinierten Ausführung (2) von Arbeitsschritten (5,6) für eine Bearbeitung eines Werkstücks (17), wobei
- eine erste Bearbeitungsvorrichtung (3) einer Bearbeitungsmaschine (4) einen ersten Arbeitsschritt (5) ausführt,
- eine zweite Bearbeitungsvorrichtung (6) der Bearbeitungsmaschine (4) oder einer weiteren Bearbeitungsmaschine (7) einen zweiten Arbeitsschritt (8) ausführt,
- der erste Arbeitsschritt (5) einen ersten Synchronisierungsparameter (9) und der zweite Arbeitsschritt (8) einen zweiten Synchronisierungsparameter (10) aufweist,
- der erste und zweite Synchronisierungsparameter (9,10) auf einem Bearbeitungsparameter (11) für die Bearbeitung des Werkstücks (17) basieren,
- in einem Vergleich (12) der erste Synchronisierungsparameter (9) kontinuierlich mit dem zweiten Synchronisierungsparameter (10) verglichen wird und
- die koordinierte Ausführung (2) von erstem und zweitem Arbeitsschritt (5,8) in Abhängigkeit vom Ergebnis des Vergleichs (12) durchgeführt wird.

2. Synchronisierungsverfahren (1) nach Anspruch 1, wobei der erste Synchronisierungsparameter (9) des ersten Arbeitsschritts (5) auf dem als ein Bearbeitungssollwert (13) ausgebildeten Bearbeitungsparameter (11) basiert.

3. Synchronisierungsverfahren (1) nach Anspruch 1 oder 2, wobei der zweite Synchronisierungsparameter (10) des zweiten Arbeitsschritts (5) auf einem als ein Simulationssollwert (14) für den als Bearbeitungssollwert (13) ausgebildeten Bearbeitungsparameter (11) oder auf einem als ein abhängiger Bearbeitungssollwert (21) für den als Bearbeitungssollwert (13) ausgebildeten Bearbeitungsparameter (11) basiert.

4. Synchronisierungsverfahren (1) nach Anspruch 3, wobei der Simulationssollwert (14) während der Durchführung des zweiten Arbeitsschrittes (8) ermittelt wird.

5. Synchronisierungsverfahren (1) nach einem der vorhergehenden Ansprüche, wobei bei einer im Ergebnis des Vergleichs (12) ermittelten Ungleichheit (15) der Synchronisierungsparameter (9,10) eine Bearbeitungsänderung (16) in zumindest einem der Arbeitsschritte (5,8) für deren jeweils zugeordnete Bearbeitungsvorrichtungen (3,6) durchgeführt wird.

6. Synchronisierungsverfahren (1) nach Anspruch 5, wobei im Fall, dass die erste Bearbeitungsvorrichtung (3) eine erste Werkzeugvorrichtung (18) mit einem ersten Werkzeug (19) aufweist, bei Ungleichheit (15) der Synchronisierungsparameter (9,10) als Bearbeitungsänderung (16) eine erste Bearbeitungsgeschwindigkeit (20) oder deren Derivate, mittels der das erste Werkzeug (19) das Werkstück (17) bearbeitet, geändert wird.

7. Synchronisierungsverfahren (1) nach Anspruch 6, wobei im Fall, dass die zweite Bearbeitungsvorrichtung (6) eine weitere Werkzeugvorrichtung (22) mit einem weiteren Werkzeug (23) aufweist, bei Ungleichheit (15) der Synchronisierungsparameter (9,10) als Bearbeitungsänderung (16) eine zweite Bearbeitungsgeschwindigkeit (24) oder deren Derivate, mittels der das weitere Werkzeug (23) das Werkstück (17) bearbeitet, geändert wird.

8. Synchronisierungsverfahren (1) nach Anspruch 6, wobei im Fall, dass die zweite Bearbeitungsvorrichtung (6) eine Werkstückvorrichtung (25) mit dem Werkstück (17) aufweist, bei Ungleichheit (15) der Synchronisierungsparameter (9,10) als Bearbeitungsänderung (16) eine dritte Bearbeitungsgeschwindigkeit (26) oder deren Derivate, mittels der die Werkstückvorrichtung (25) das Werkstück (17) gegenüber dem ersten Werkzeug (19) bewegt, geändert wird.

9. Synchronisierungsverfahren (1) nach einem der vorhergehenden Ansprüche, wobei der erste Arbeitsschritt (5) mittels eines ersten Teilprogramms (27) und der zweite Arbeitsschritt (8) mittels eines zweiten Teilprogramms (28) durchgeführt wird und wobei ein Bearbeitungsprogramm (29) zumindest eines der Teilprogramme (27,28) für entsprechend einen der Arbeitsschritte (5,8) und ein Vergleichsprogramm (30) für den Vergleich (12) der Synchronisierungsparameter (9,10) umfasst.

10. Synchronisierungsverfahren (1) nach Anspruch 9, wobei das Vergleichsprogramm (30) in einem der Teilprogramme (27,28) ausgeführt wird.

11. Synchronisierungsverfahren (1) nach einem der vorhergehenden Ansprüche, wobei die Arbeitsschritte (5,8) und der Vergleich (12) mittels einer Cloud-Applikation (31) in einer Cloud (32) ausgeführt werden.

12. Synchronisierungsverfahren (1) nach Anspruch 11, wobei die erste Bearbeitungsvorrichtung (3) der Bearbeitungsmaschine (4) und die zweite Bearbeitungsvorrichtung (6) der Bearbeitungsmaschine (4) oder der weiteren Bearbeitungsmaschine (7) für die Ausführung der Arbeitsschritte (5,8) und des Vergleichs (12) als digitale Zwillinge (33) in der Cloud (32) hinterlegt sind.

13. Bearbeitungsmaschine (4) für eine Bearbeitung eines Werkstücks (17), umfassend eine erste Bearbeitungsvorrichtung (3) mit einem ersten Synchronisierungsparameter (9) in einem ersten Arbeitsschritt (5), eine zweite Bearbeitungsvorrichtung (6) mit einem zweiten Synchronisierungsparameter (10) in einem zweiten Arbeitsschritt (8) und eine Reglungseinheit (43) für eine Durchführung eines Vergleichs (12) der beiden Synchronisierungsparameter (9,10) und eine Umsetzung der Arbeitsschritte (5,8) gemäß dem erfindungsgemäßen Synchronisierungsverfahren (1) nach einem der Ansprüche 1 bis 12 zur koordinierten Ausführung der Arbeitsschritte (5,8) für die Bearbeitung des Werkstücks (17).

14. Bearbeitungsmaschinensystem (34) für eine Bearbeitung eines Werkstücks (17), umfassend eine erste Bearbeitungsvorrichtung (3) einer Bearbeitungsmaschine (4) mit einem ersten Synchronisierungsparameter (9) in einem ersten Arbeitsschritt (5), eine zweite Bearbeitungsvorrichtung (6) einer weiteren Bearbeitungsmaschine (7) mit einem zweiten Synchronisierungsparameter (10) in einem zweiten Arbeitsschritt (8) und eine Reglungseinheit (43) für eine Durchführung eines Vergleichs (12) der beiden Synchronisierungsparameter (9,10) und eine Umsetzung der Arbeitsschritte (5,8) gemäß dem erfindungsgemä-ßen Synchronisierungsverfahren (1) nach einem der Ansprüche 1 bis 12 zur koordinierten Ausführung der Arbeitsschritte (5,8) für die Bearbeitung des Werkstücks (17).

15. Computerprogrammprodukt (35), ausgebildet zur zumindest teilweisen Ausführung eines Synchronisierungsverfahrens (1) nach einem der Ansprüche 1 bis 12.
